# EUROPEAN PATENT SPECIFICATION

(11) **EP 1 462 668 B1**
(45) Date of publication and mention of the grant of the patent: **28.02.2007**
(21) Application number: 04006199.6
(22) Date of filing: 16.03.2004
(51) Int. Cl.: F16C 7/04, F02B 75/04, F02B 75/38

(54) **Extendable coupling structure for use in an engine**
Verlängerbare Verbindungsstruktur in einer Brennkraftmaschine
Structure de connexion prolongeable pour un moteur à combustion interne

(30) Priority: 26.03.2003 US 457299 P; 06.02.2004 US 772459
(43) Date of publication of application: 29.09.2004
(73) Proprietor: Meyer, Siegfried, 86732 Oettingen (DE)
(72) Inventor: Meyer, Siegfried, 86732 Oettingen (DE)
(74) Representative: Casalonga, Axel

(56) References cited:
- EP-A- 0 420 829
- US-A- 2 160 012
- US-A- 3 908 623
- US-A- 4 266 443

## Description

The present invention relates to an internal combustion end and, more specifically, to an extendable coupling structure for use in an engine to connect a crankshaft to a piston and to increase the output torque of the engine.

In a typical internal combustion engine, of the type found in most vehicles today, a plurality of pistons are respectively movably mounted in a plurality of cylinders formed in an engine block. Each of the pistons has one end connected with a piston rod and the other end coupled to a crankshaft. When spark plugs in the engine block fired to ignite fuel mixture, the pistons are driven downward to turn the crankshaft, which ultimately drives the entire vehicle. At present, in a typical engine, connecting rods are used and connected with the respective first end to the corresponding piston and the respective second end to the corresponding crankshaft. The connecting points between the two ends of each connecting rod and the corresponding piston and corresponding crankshaft are disposed at the ends of the longitudinal center axis of the respective connecting rod. By means of the coupling of the connecting rod between the corresponding piston and the corresponding crankshaft, reciprocating motion of the piston causes the corresponding crankshaft to rotate.

Presently, researchers have reported many studies to enhance the output torque by extending the moving distance of the connecting rods between the pistons and the crankshafts.

The US patents US-A-2 160 012 and US-A-4 206 443 disclose connecting rods comprising sections to be connected to a wrist pin and to a crank throw, and which are pivotally connected together. The connecting rods also comprise means to limit pivotal movement of the section relative to each other.

The present invention has been accomplished under the circumstances in view. It is one object of the present invention to provide an extendable coupling structure for use in an engine to connect a crankshaft to a piston, which greatly enhances the output torque of the engine.

It is another object of the present invention to provide an extendable coupling structure for use in an engine to connect a crankshaft to a piston, which saves fuel consumption of the engine.

It is still another object of the present invention to provide an extendable coupling structure for use in an engine to connect a crankshaft to a piston, which improves the performance of the engine, resulting in reduced amount of solid matter in exhaust gas of the engine.

To achieve these and other objects and according to one aspect of the present invention, the extendable coupling structure is installed in an engine and coupled between a piston and a crankshaft, comprising a first connector pivoted to the piston, a second connector pivoted to the crankshaft, a hinge coupled between the first connector and the second connector, and a spring-based guide coupled between the bottom end of the first connector and the top end of the second connector and adapted to guide movement of the first connector and the second connector between a close position and an open position and to accelerate rotation of the crankshaft. Said first connector comprises a ball socket formed in the bottom end thereof. Said second connector comprises a stepped receiving hole axially extended in the top end thereof. Said spring-based guide means has first end coupled to the ball socket of said first connector and a second end axially movably coupled to the stepped receiving hole of said second connector. According to another aspect of the present invention, the spring-based guide comprises a spring guide pin axially movable suspended in a stepped receiving hole in the top end of the second connector, a spring member mounted around the spring guide pin in the stepped receiving hole, the spring member having a top end fixedly fastened to the periphery of the spring guide pin and a bottom end supported on a step inside the stepped receiving hole, and a movable press rod member, the movable press rod member having a top end terminating in a rounded head coupled to a ball socket in the bottom end of the first connector and a bottom end terminating in a flat circular block axially movably fitted into the stepped receiving hole and stopped against the top end of the spring member and the top end of the spring guide pin.

The accompanying drawing is included to provide a further understanding of the invention, and is incorporated in and constitutes a part of this specification. The drawing illustrates an embodiment of the invention and, together with the description, serves to explain the principles of the invention. In the drawing,
FIG. 1 is a sectional plain view of the prior art design.
FIG. 2 is a sectional view showing the detailed structure of an extendable coupling structure according to the present invention.
FIG. 3 is a schematic drawing showing the action of the extendable coupling structure according to the present invention.
FIGS. 4A~4D are schematic drawings showing one moving cycle of the extendable coupling structure with the piston from the top dead center to the bottom dead center and then from the bottom dead center back to the top dead center according to the present invention.

Reference will now be made in detail to the illustrative embodiment of the present invention, examples of which are illustrated in the accompanying drawings. Wherever possible, the same reference numbers are used in the drawings and the description to refer to the same or like parts.

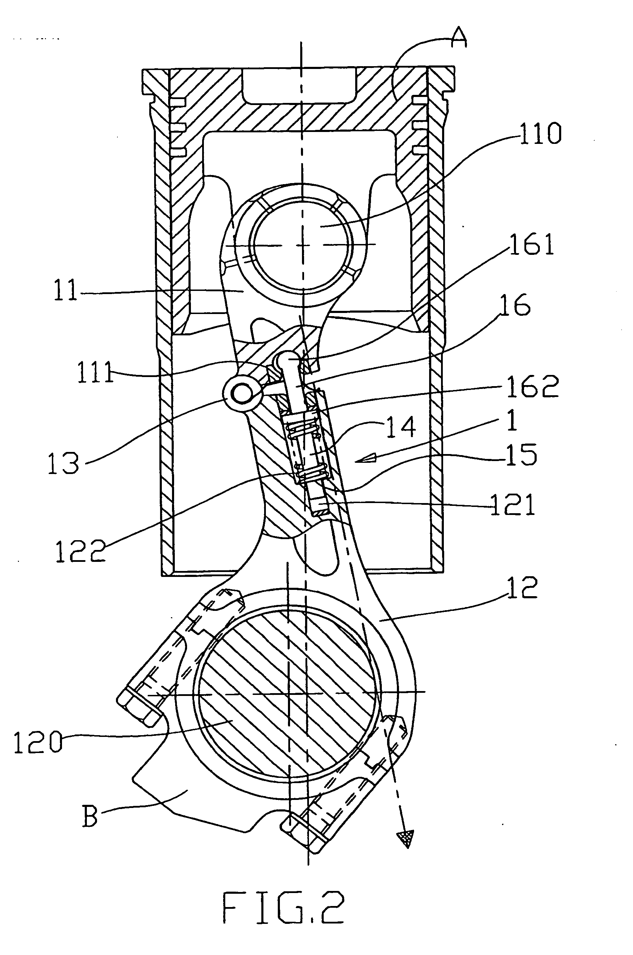

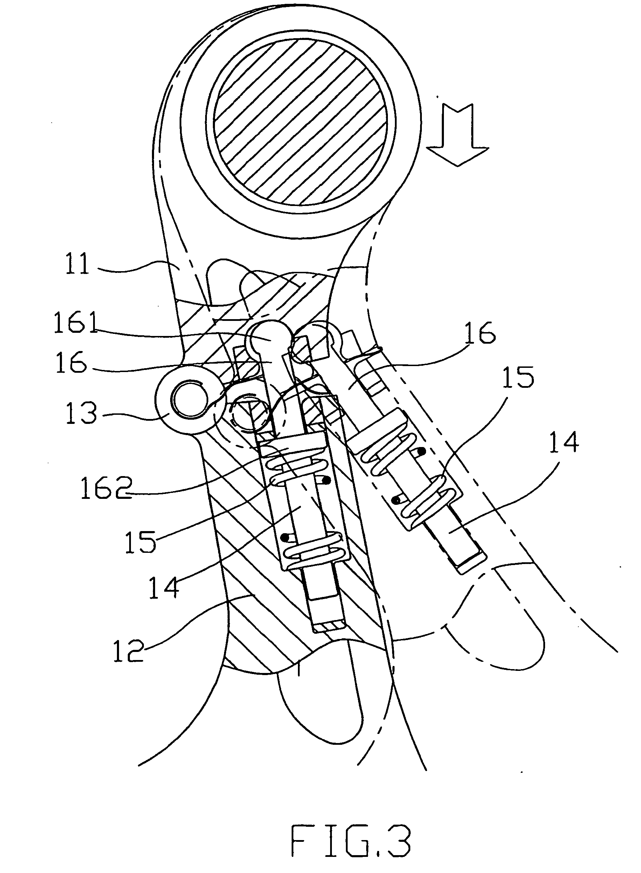

Referring to FIGS. 2 and 3, an extendable coupling structure **1** is shown comprised of a first connector **11**, a second connector **12**, a hinge **13**, a spring member **14**, a spring guide pin **15**, and a movable press rod member **16**.

The first connector **11** has one end, namely, the top end pivoted to a piston **A** by a pivot pin **110**, and the other end, namely, the bottom end terminating in a ball socket **111**.

The second connector **12** has one end, namely, the bottom end pivoted to a crankshaft **B** by a pivot pin **120**, and the other end, namely, the top end provided with an axially extended stepped receiving hole **121**.

The hinge **13** is connected between the periphery of the bottom end of the first connector **11** and the periphery of the top end of the second connector **12**, for enabling the first connector **11** and the second connector **12** to be turned relative to each other.

The spring guide pin **14** is axially movable suspended in the stepped receiving hole **121** in the second connector **12**.

The spring member **15** according to this embodiment is a compression spring mounted around the spring guide pin **14** in the stepped receiving hole **121**, having a top end fixedly fastened to the periphery of the spring guide pin **14** and a bottom end supported on a step **122** inside the stepped receiving hole **121.**

The movable press rod member **16** has a top end terminating in a rounded head **161** coupled to the ball socket **111** of the first connector **11,** and a bottom end terminating in a flat circular block **162** axially movably fitted into the stepped receiving hole **121** and stopped against the top end of the spring member **15** and the spring guide pin **14**.

Referring to FIG. 3 again, because the first connector **11** and the second connector **12** re connected together by the hinge **13**, they can be closed (moved toward each other) and opened (turned outwards from each other). When the first connector **11** and the second connector **12** closed, the movable press rod member **16** is forced downwards to compress the spring member **15**, and the spring guide pin **14** is lowered to touch the inside bottom end of the stepped receiving hole **121**. On the contrary, when the first connector **11** gives no pressure to the movable press rod member **16**, the spring member **15** immediately returns to its former shape, imparting an upward pressure to the spring guide pin **14** and the movable press rod member **16**. Further, because the movable press rod member **16** is coupled between the ball socket **111** of the first connector **11** and the stepped receiving hole **121** of the second connector **12**, it limits the turning angle between the first connector **11** and the second connector **12** to a limited range.

As an alternate form of the present invention, the spring guide pin **14** may be formed integral with the flat circular block **162** of the movable press rod member **16**.

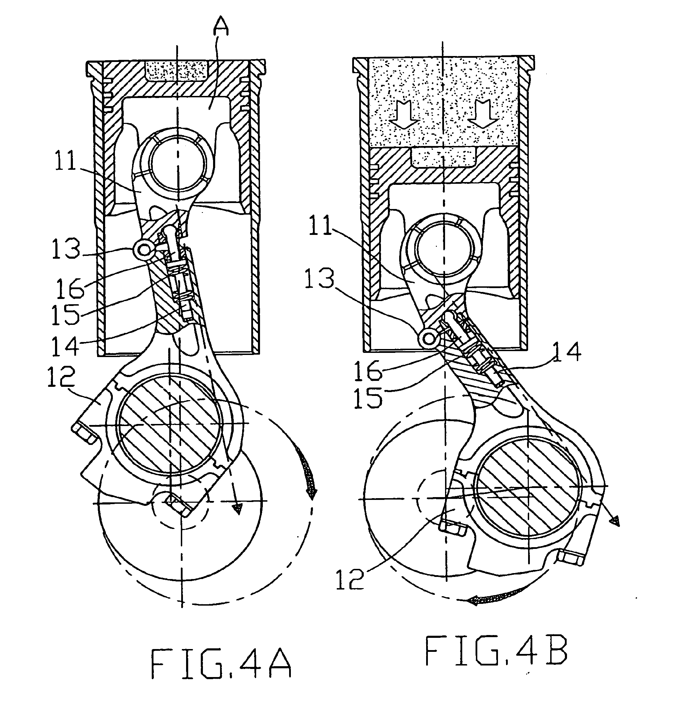

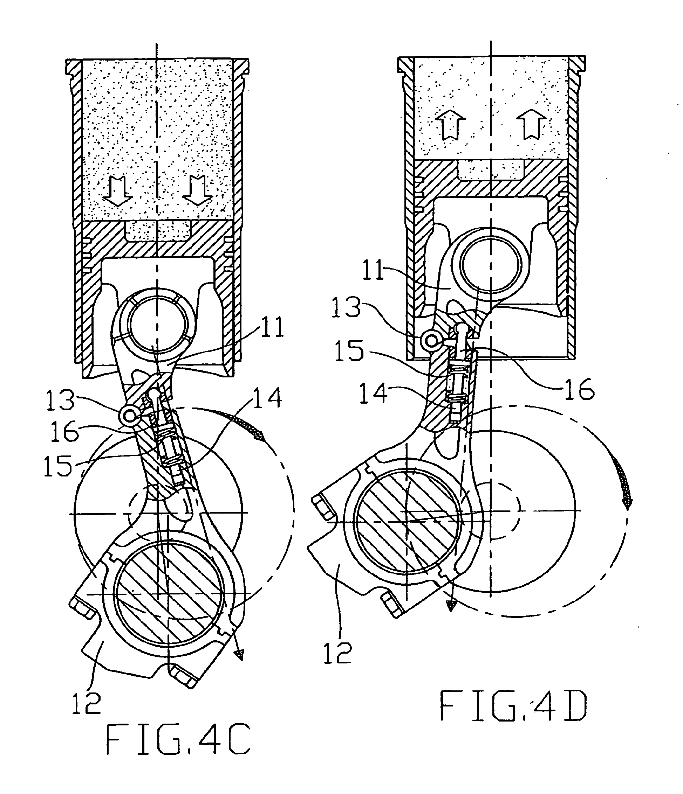

Referring to FIGS. 4A~4D, when the extendable coupling structure **1** moved with the piston **A** to the top dead center in the combustion engine, the spring member **15** is released. When the piston **A** moving downwards from the top dead center in the combustion engine toward the bottom dead center, the spring member **15** is compressed by the movable press rod member **16**, and the spring guide pin **14** is lowered to touch the inside bottom end of the stepped receiving hole **121**, imparting a pressure to force the crankshaft **B** to rotate, and therefore the piston **A** is moved with the extendable coupling structure **1** rapidly downwardly to the bottom dead center in the combustion engine. When the piston **A** was moved with the extendable coupling structure **1** to the bottom dead center in the combustion engine, the spring member **14** is released. When the spring member **15** returned to its former shape during reciprocating motion of the piston **A**, it imparts a pressure to the second connector **12** against the crankshaft **B**, accelerating the rotation of the crankshaft **B**. Therefore, the spring member **15** is alternatively compressed and released during reciprocating motion of the piston **A**, and the reciprocating speed of the piston **A** is accelerated.

As indicated above, the extendable coupling structure of the present invention uses a spring member to accelerating the rotary motion of the crankshaft during reciprocating motion of the piston, thereby enhancing the output torque of the engine. Because the invention greatly improves the performance of the engine, the engine can save much fuel and reduces the production of waste gas.

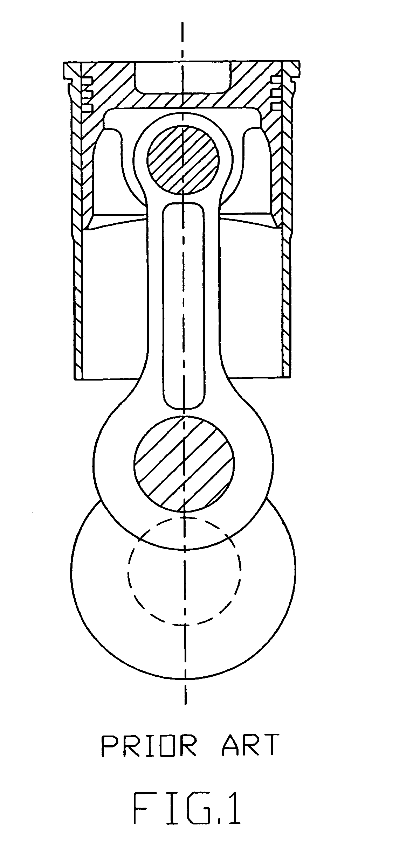

A prototype of extendable coupling structure for use in an engine has been constructed with the features of FIGS. 1-4. The extendable coupling structure for use in an engine functions smoothly to provide all of the features discussed earlier.

## Claims

1. An extendable coupling structure used in an engine and coupled between a piston and a crankshaft, comprising:
a first connector (11), said first connector having a top end pivoted to said piston and a bottom end;
a second connector (12), said second connector having a bottom end pivoted to said crankshaft and a top end;
hinge means (13) coupled between the periphery of the bottom end of said first connector and the periphery of the top end of said second connector for enabling said first connector and said second connector to be turned relative to each other between a close position and an open position; and
spring-based guide means (14, 15, 16) coupled between the bottom end of said first connector and the top end of said second connector and adapted to guide movement of said first connector and said second connector between said close position and said open position, **characterized in that** said first connector comprises a ball socket (111) formed in the bottom end thereof, said second connector comprises a stepped receiving hole axially extended in the top end thereof; said spring-based guide means (14, 15, 16) has first end coupled to the ball socket of said first connector and a second end axially movably coupled to the stepped receiving hole of said second connector.

2. The extendable coupling structure as claimed in claim 1, wherein said spring-based guide means comprises a spring guide pin (14) axially movable suspended in said stepped receiving hole of second connector, said spring guide pin having a top end aimed at said ball socket of said first connector, a spring member (15) mounted around said spring guide pin in said stepped receiving hole, said spring member having a top end fixedly fastened to the periphery of said spring guide pin and a bottom end supported on a step inside said stepped receiving hole, and a movable press rod member (16), said movable press rod member having a top end terminating in a rounded head coupled to said ball socket of said first connector and a bottom end terminating in a flat circular block axially movably fitted into said stepped receiving hole and stopped against the top end of said spring member and the top end of said spring guide pin.

3. The extendable coupling structure as claimed in claim 2, wherein said spring member (15) is a compression spring.

4. The extendable coupling structure as claimed in claim 2, wherein said spring guide pin (14) has the top end thereof formed integral with the flat circular block of said movable press rod member.

## Patentansprüche

1. In einer Maschine verwendete und zwischen einem Kolben und einer Kurbelwelle angekoppelte verlängerbare Verbindungsstruktur, aufweisend:
einen ersten Verbinder (11), der ein bezüglich des Kolbens schwenkbares oberes Ende und ein unteres Ende hat aufweist;
einen zweiten Verbinder (12), der ein bezüglich der Kurbelwelle schwenkbares unteres Ende und ein oberes Ende aufweist;
eine Gelenkeinrichtung (13), die zwischen dem Rand des unteren Endes des ersten Verbinders und dem Rand des oberen Endes des zweiten Verbinders angekoppelt ist, um den ersten Verbinder und den zweiten Verbinder in die Lage zu versetzen, relativ zueinander zwischen einer geschlossenen Stellung und einer offenen Stellung verdreht zu werden; und
eine federbasierte Führungseinrichtung (14, 15, 16), die zwischen dem unteren Ende des ersten Verbinders und dem oberen Ende des zweiten Verbinders angekoppelt ist und dazu ausgelegt ist, die Bewegung des ersten Verbinders und des zweiten Verbinders zwischen der geschlossenen Stellung und der offenen Stellung zu führen,
**dadurch gekennzeichnet, daß** der erste Verbinder eine an seinem unteren Ende gebildete Kugelpfanne (111) aufweist, der zweite Verbinder ein sich in seinem oberen Ende axial erstreckendes abgestuftes Aufnahmeloch aufweist; die federbasierte Führungseinrichtung (14, 15, 16) ein mit der Kugelpfanne des ersten Verbinders gekoppeltes erstes Ende und ein axial bewegliches, mit dem gestuften Aufnahmeloch des zweiten Verbinders gekoppeltes zweites Ende aufweist.

2. Verlängerbare Verbindungsstruktur nach Anspruch 1, wobei die federbasierte Führungseinrichtung einen Federführungsstift (14), der axial beweglich in dem gestuften Aufnahmeloch des zweiten Verbinders aufgehangen ist, wobei der Federführungsstift ein auf das obere Ende der Kugelpfanne des ersten Verbinders zielendes oberes Ende aufweist, ein Federteil (15), das um den Federführungsstift in dem gestuften Aufnahmeloch angebracht ist, wobei das Federteil ein oberes Ende befestigterweise an den Rand des Federführungsstifts angeschlossen hat und ein unteres Ende auf einer Stufe innerhalb des gestuften Aufnahmelochs abgestützt hat, und ein bewegliches Druckstangenteil (16) aufweist, wobei das bewegliche Druckstangenteil ein oberes Ende hat, das in einem abgerundeten Kopf endet, der an die Kugelpfanne des ersten Verbinders gekoppelt ist, und ein unteres Ende hat, das in einem flachen kreisförmigen Block endet, der axial beweglich in das gestufte Aufnahmeloch eingepaßt ist und gegen das obere Ende des Federteils und das obere Ende des Federführungsstifts gestoppt ist.

3. Verlängerbare Verbindungsstruktur nach Anspruch 2, bei der das Federteil (15) eine Kompressionsfeder ist.

4. Verlängerbare Verbindungsstruktur nach Anspruch 2, bei der der Führungsstift (14) sein oberes Ende einstückig mit dem flachen kreisförmigen Block des beweglichen Druckstangenteils ausgebildet hat.

## Revendications

1. Structure d'accouplement extensible utilisée dans un moteur et couplée entre un piston et un vilebrequin, comprenant :
un premier élément de jonction (11), ledit premier élément de jonction ayant une extrémité supérieure montée à pivotement sur ledit piston et une extrémité inférieure ;
un deuxième élément de jonction (12), ledit deuxième élément de jonction ayant une extrémité inférieure montée à pivotement sur ledit vilebrequin et une extrémité supérieure ;
un moyen d'articulation (13) couplé entre la périphérie de l'extrémité inférieure dudit premier élément de jonction et la périphérie de l'extrémité supérieure dudit deuxième élément de jonction pour permettre audit premier élément de jonction et audit deuxième élément de jonction de tourner l'un par rapport à l'autre entre une position fermée et une position ouverte ; et
un moyen de guidage à ressort (14, 15, 16) couplé entre l'extrémité inférieure dudit premier élément de jonction et l'extrémité supérieure dudit deuxième élément de jonction et adapté pour guider le mouvement dudit premier élément de jonction et dudit deuxième élément de jonction entre ladite position fermée et ladite position ouverte, **caractérisée en ce que** ledit premier élément de jonction comprend un logement de rotule (111) formé dans son extrémité inférieure, ledit deuxième élément de jonction comprend un trou récepteur étagé s'étendant axialement dans son extrémité supérieure, ledit moyen de guidage à ressort (14, 15, 16) a une première extrémité couplée au logement de rotule dudit premier élément de jonction et une deuxième extrémité couplée de façon mobile axialement au trou récepteur étagé dudit deuxième élément de jonction.

2. Structure d'accouplement extensible selon la revendication 1, dans laquelle ledit moyen de guidage à ressort comprend un axe de guidage de ressort (14) mobile axialement et suspendu dans ledit trou récepteur étagé du deuxième élément de jonction, ledit axe de guidage de ressort ayant une extrémité supérieure orientée vers ledit logement de rotule dudit premier élément de jonction, un élément formant ressort (15) monté autour dudit axe de guidage de ressort dans ledit trou récepteur étagé, ledit élément formant ressort ayant une extrémité supérieure attachée de manière fixe à la périphérie dudit axe de guidage de ressort et une extrémité inférieure supportée sur un rebord situé à l'intérieur dudit trou récepteur étagé, et un élément formant tige de pression mobile (16), ledit élément formant tige de pression mobile ayant une extrémité supérieure se terminant par une tête arrondie couplée audit logement de rotule dudit premier élément de jonction et une extrémité inférieure se terminant par un bloc circulaire plat monté de façon mobile axialement dans ledit trou récepteur étagé et butant contre l'extrémité supérieure dudit élément formant ressort et l'extrémité supérieure dudit axe de guidage de ressort.

3. Structure d'accouplement extensible selon la revendication 2, dans laquelle ledit élément formant ressort (15) est un ressort de compression.

4. Structure d'accouplement extensible selon la revendication 2, dans laquelle l'extrémité supérieure dudit axe de guidage de ressort (14) est formée d'un seul tenant avec le bloc circulaire plat dudit élément formant tige de pression mobile.
